Europäisches Patentamt

European Patent Office

Office européen des brevets

(19)

(11) Publication number: **0 121 438**

**A1**

(12) **EUROPEAN PATENT APPLICATION**

(21) Application number: **84302252.6**

(22) Date of filing: **02.04.84**

(51) Int. Cl.³: **B 23 Q 7/14**

(30) Priority: **31.03.83 GB 8308930**

(43) Date of publication of application:
**10.10.84 Bulletin 84/41**

(84) Designated Contracting States:
**AT BE CH DE FR GB IT LI NL SE**

(71) Applicant: VICKERS PLC
Vickers House Millbank Tower Millbank
London SW1P 4RA(GB)

(72) Inventor: Felstead, Graham Kirk
82 Michel Dene East Dene
Eastbourne Sussex(GB)

(72) Inventor: Wheaton, Michael Gaylard
29 Wicklands Avenue Saltdean
Brighton Sussex(GB)

(74) Representative: Burrows, Anthony Gregory et al,
Haseltine Lake & Co. Hazlitt House 28 Southampton
Buildings Chancery Lane
London, WC2 1AT(GB)

(54) **Flexible manufacturing system and method.**

(57) A flexible manufacturing system sold to a small scale manufacturer comprises a machine tool 100 with a pallet-presenting apparatus 105 with two pallets 1 and 2. As the manufacturer grows, he can expand the system in stages by replacing a two-pallet indexing plate 107 by a four-pallet indexing plate, add a temporary storing apparatus 111 and a pallet-transfer apparatus 112-114 serving the apparatus 105 and 111, add other temporary storing apparatus for further pallets and served by the transfer apparatus 112-114, add another machine tool with a pallet-presenting apparatus itself also served by the transfer apparatus 112-114, to form a machining line, and add other machining lines with a common temporary storing apparatus serving all of the lines.

FIG.3.

"FLEXIBLE MANUFACTURING SYSTEM AND METHOD

This invention relates to a flexible manufacturing system and method.

Series manufacture using NC machine tools is a conventional technique in modern mechanical engineering. It is not unusual for a manufacturer to begin by acquiring a relatively simple machine tool, for example one in which workpiece-carrying pallets are manually loaded into and unloaded from the machine tool, and, as his scale of manufacture grows larger and larger, for him to acquire machine tools which have higher and higher capacities and are more and more complicated, the earlier machine tool(s) either continuing to be employed or being disposed of.

Flexible manufacturing systems process workpieces completely from the unmachined part to the finished part, in single-part or series manufacture. Each system can include material flow sub-systems which convey, store and manipulate the workpieces and the tools. It is important to have good flexibility with respect to differing workpieces and as regards time relationships in the use made of the operational stations and the in-process times.

An article "Das Fertigungszentrum KOR-1 als Biespiel eines automatischen Maschinensystems" on pages 1 to 3 of the journal VDI Zeitschrift, volume 119, no. 6, the 11th March 1977, discloses a manufacturing unit KOR 1 as an example of an automatic machine system. The system itself consists of three sub-systems, namely a machining sub-system, a workpiece flow sub-system and a control sub-system, and is discussed as applied to the machining of cast iron casings of various types. A typical casing can be machined with a single clamping on a pallet. Of the five operations required for machining the typical casing, four are needed for machining the side surfaces and one for the top surface. The unit comprises four horizontal and one vertical machining sub-units. The unit can also be used for machining of casings for which more than one clamping-up is needed (for example if all six sides are to be machined) and for machining of relatively small workpieces, for example plates and lids, of which two or more are clamped to a common pallet. The machining sub-unit also comprises chain magazines for automatic tool changing and an automatic vice.

The starting and finishing points of the workpiece flow sub-system are a loading station and an unloading station wherein the workpieces are clamped to and unclamped from the pallets by an operative. In the selection of each new workpiece to be clamped, the operative is to act in accordance with information passed to him by means of monitor apparatus through the control sub-system. The main part of the workpiece flow sub-system is a central conveyor for transporting the workpiece-carrying pallets among the loading and unloading stations, buffer pallet-storage stations and machining stations. Between the central conveyor, on the one hand, and the loading, unloading and machining stations, on the other hand, are auxiliary conveyors for transporting the pallets.

The control sub-system includes two minicomputers operating in on-line mode, one controlling the machining stations including their auxiliary conveyors, and the other controlling the remainder of the workpiece flow sub-system and reporting on the work carried out by the unit.

The KOR-1 unit is a flexible NC machine system, but has too great a capacity to be economic as a purchase for purely small scale manufacture.

An article "Palettenfördersystem mit Linearmotorantrieb" on pages 681 to 685 of the journal Werkstattstechnik, volume 68, No. 11, of November 1978 discloses, for use in a flexible manufacturing system, a pallet conveying system with linear motor drive. The workpiece-carrying pallets are arranged to roll along guide rails and are moved by linear motor drive units which can be coupled to and uncoupled from the pallets.

Our British Patent Specification 2049503 discloses a system comprising a machine tool and an apparatus for cyclically presenting four workpiece-carrying pallets to the machine tool, in which an indexing drive arrangement advances stepwise the pallets on a pallet carrier such that the pallets follow the same circular path and are brought successively to a transfer position on the path, and a shuttle mechanism carries the pallets individually between the transfer position and a machining region. The operation of the shuttle mechanism is synchronized with the indexing of the drive arrangement such that, in use, each pallet is moved along the path by the drive arrangement to the transfer position, and is displaced thence to the machining region and subsequently returned to the transfer position by the shuttle mechanism in both cases, and then is moved along the path by the drive arrangement.

That system has a relatively limited manufacturing capacity.

An article "Baukastensystem für NC - Fertigungseinheiten" on pages 543 to 547 of the journal Werkstattstechnik, volume 71, No. 9, of September 1981, discloses a range of modular parts from which it is possible for the machine tool manufacturer to extract simple machining devices or to construct complete machining systems. In a modular range for machining centres and production lines, the following modular parts are provided: a centre unit, an indexing unit, a centre unit sliding table, a side stand, a side stand sliding table, a slide unit, a vertical stand sliding table, a cross slide, a height adjustment unit, a round table, a turning unit, a milling unit, a milling quill, a transmission unit, a drill head, a drill head shifting device, a drill head changing device, a facing head, and control-and drive elements-motors. These modular parts can be put together to form manufacturing units of various kinds, for example conventional or NC individual machines, special machines, flexible machining centres and manufacturing lines. An example is given of a machining centre with vertical arrangement of the workpiece pallet in the machining station and with its machining unit carrying out the tool fetching movement. In this example, a drill head changer can be provided. Another example is given of a flexible manufacturing system combining a NC milling machine, a NC drill head changer, a NC machining centre and a CNC three-coordinate measuring apparatus as the most sensible combination for prismatic workpieces. It is explained that the first complete stage is the machining centre with pallet depot and pallet carriage, the pallets being only moved to-and-fro and being loaded and unloaded at specific positions. The pallet carriage fetches the pallets when required and brings them to a pallet changer. Apparently, by means of an extension it is possible later to bring-in the NC milling machine and the drill head changer.

Again, the apparatus as supplied by its manufacturer is of a predetermined capacity and the purchaser would buy a replacement apparatus in order to alter his capacity.

According to one aspect of the present invention, there is provided a flexible manufacturing system, comprising a machining apparatus comprising first and second supports for first and second workpieces, respectively, a holder for a tool for machining the workpieces, and drive means arranged to produce relative movement between said holder, on the one hand, and said supports, on the other hand, so that said supports are in turn in a ready condition relative to said holder, characterized in that means are provided for use in converting said system to receive more workpieces than said first and second workpieces at any one time, said means comprising further apparatus comprising further supports for respective further workpieces, which further supports can be in turn in said ready condition relative to said holder.

According to another aspect of the present invention, there is provided a method of utilizing a flexible manufacturing system, which system comprises a machining apparatus comprising first and second supports for first and second workpieces, respectively, a holder for a tool for machining the workpieces, and drive means arranged to produce relative movement between said holder, on the one hand, and said supports, on the other hand, so that said supports are in turn in a ready condition relative to said holder, characterized in that said method further comprises converting said system to receive more workpieces than said first and second workpieces at any one time, by associating with said machining apparatus further apparatus comprising further supports for respective further workpieces, such associating comprising arranging that said further supports can be in turn in said ready condition relative to said holder.

Owing to the invention, it is possible for a customer of a machine tool manufacturer to increase his capacity in stages without the machine tools which he has earlier purchased from the manufacturer becoming redundant. In this way, the customer can make very considerable savings on capital expenditure.

In order that the invention may be clearly understood and readily carried into effect, reference will now be made, by way of example, to the accompanying drawings, in which:-

Figure 1 shows a diagrammatic top plan view of a machine tool with a pallet-presenting apparatus of a flexible manufacturing system, with the system able to receive two workpieces at any one time,

Figure 2 shows a diagrammatic top plan view of that machine tool, but with the pallet-presenting apparatus converted so that the system is able to receive four workpieces at any one time,

Figure 3 shows a diagrammatic top plan view of the machine tool and pallet-presenting apparatus of Figure 1, but associated with additional apparatus whereby the system can receive five workpieces at any one time,

Figure 4 shows a diagrammatic top plan view of a machine tool and pallet-presenting apparatus according to Figure 2 and associated with other additional apparatus whereby the system can receive ten workpieces at any one time,

Figure 5 shows a diagrammatic top plan view of two pairs of machine tools and pallet-presenting apparatus, each as shown in Figure 1, and associated with yet other additional apparatus whereby the system can receive twelve workpieces at any one time.

Figure 6 shows a diagrammatic top plan view of three pairs of machine tools and pallet-presenting apparatus, each as shown in Figure 1, and associated with further additional apparatus whereby the system can receive almost forty workpieces at any one time, and

Figure 7 shows a diagrammatic top plan view of twelve pairs of machine tools and pallet-presenting apparatus, each as shown in Figure 1, and associated with yet further apparatus whereby the system can receive over one hundred workpieces at any one time.

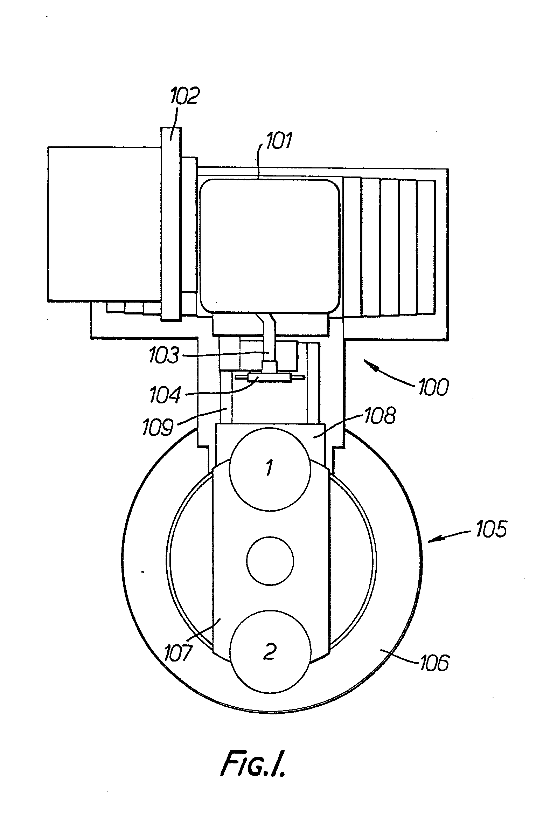

Referring to Figure 1, the machine tool 100 comprises an upstanding tower 101 carrying on one side thereof a magazine 102 for storing in individual storage positions a plurality of machining tools; a powered machining spindle (not seen) which can be lowered relatively to the tower 101 for carrying out machining operations on workpieces, and tool transfer means, including a transfer arm 103 and a tool change arm 104, for individually transferring any selected tool in the magazine 102 to the machining spindle (when in an upper, tool change, position) while simultaneously returning the tool previously in the spindle to a vacant position in the magazine 102.

The machine tool 100 is provided with apparatus 105 for cyclically presenting workpiece-carrying pallets 1 and 2 to the machine tool 100 in a machining region to enable workpieces on the respective pallets to be machined by selected tools in the machining spindle. This apparatus 105 includes a stationary, horizontal, base table structure 106 which is circular, and on which the circular pallets 1 and 2 can run, so that the pallets can all travel along the same circular path about the vertical central axis of the structure 106. Centered on this axis is a horizontal indexing plate 107 which is mounted for rotation about that vertical axis and is formed with substantially semi-circular cut-outs in its radially outer edges so as to accommodate in each cut-out a pallet 1 or 2. The apparatus 105 additionally incorporates a shuttle carriage 108 which runs on fixed rails 109, whereby the carriage 108 can be moved towards and away from the tower 101. The carriage 108 supports a horizontal table (not seen) whose angular position about a vertical axis of the table can be adjusted to a desired new position as the carriage 108 moves along the rails 109. In the position of the carriage 108 furthest from the tower 101, the pallet nearest the tower 101 (in Figure 1 the pallet 1) is clamped to this table prior to being advanced towards the tool. After machining of the workpiece on the pallet 1, the carriage 108 is returned to its position shown in Figure 1, where the workpiece-carrying pallet 1 is unclamped from the horizontal table, and then the indexing plate 107 is turned through 180° to bring the workpiece-carrying pallet 2 to above the horizontal table for clamping thereto and subsequent presentation of its workpiece to a tool. The pallet 1 is replaced manually or automatically by another workpiece-carrying pallet.

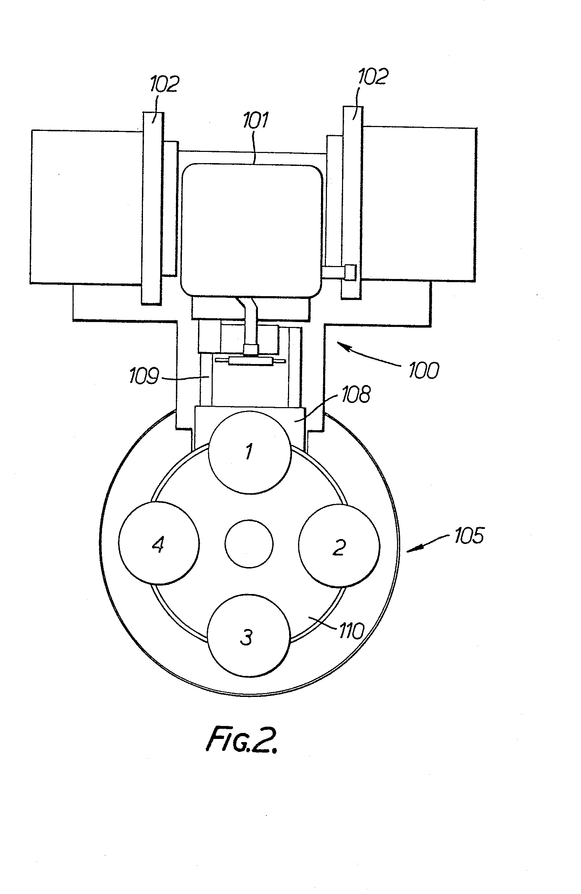

The apparatus 105 is so designed that the system can be converted to receive more than two workpiece-carrying pallets at any one time. For example, referring to Figure 2, the apparatus 105 has been converted to receive four workpiece-carrying pallets 1 to 4. For this purpose, the horizontal indexing plate 107 provided with two diametrically opposite semi-circular cut-outs has been replaced by a horizontal indexing plate 110 rotatable about the same vertical axis but provided with four semi-circular cut-outs equi-angularly spaced round that vertical axis. The pallets 1 to 4 are thereby brought in turn to a position immediately above the horizontal table in order to be clamped thereto. As shown in Figure 2, another tool storage magazine 102 can be added to the other side of the tower 101, thus doubling the tool storage capacity.

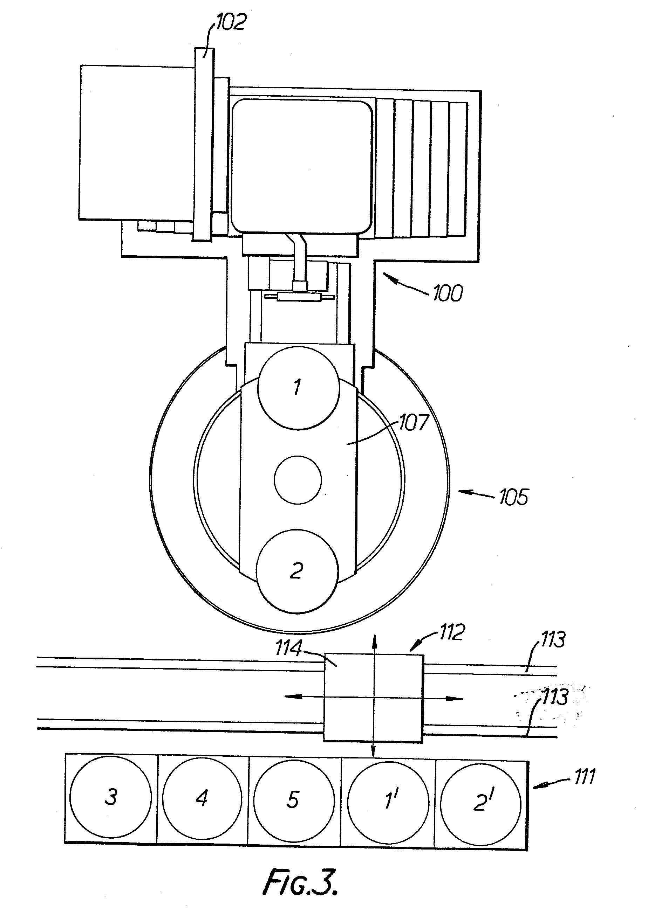

In addition to the pallet presenting apparatus 105 there can be provided temporary storing apparatus for workpiece-carrying pallets, together with pallet-transferring apparatus for transferring the pallets from the temporary storing apparatus to the pallet presenting apparatus 105 of Figure 1 or 2. An example is shown in Figure 3, wherein the machine tool 100 and the pallet-presenting apparatus 105 are as shown in Figure 1, but a temporary storing apparatus 111 and a pallet-transferring apparatus 112 are provided. The apparatus 111 includes a horizontal row of five storage spaces for the five workpiece-carrying pallets 1 to 5, although, since the pallets 1 and 2 are shown loaded onto the apparatus 105, their temporary storage spaces are indicated at 1' and 2' in the Figure. The apparatus 112 comprises a pair of horizontal guides 113 extending parallelly to the horizontal row of storage spaces of the apparatus 111 and slidably guiding a transfer slide 114 on which is mounted a mechanism (not shown) for transferring the pallets to-and-fro between the apparatus 111 and the apparatus 105. The pallets can be placed on and removed from their temporary storage positions in the apparatus 111 manually or automatically.

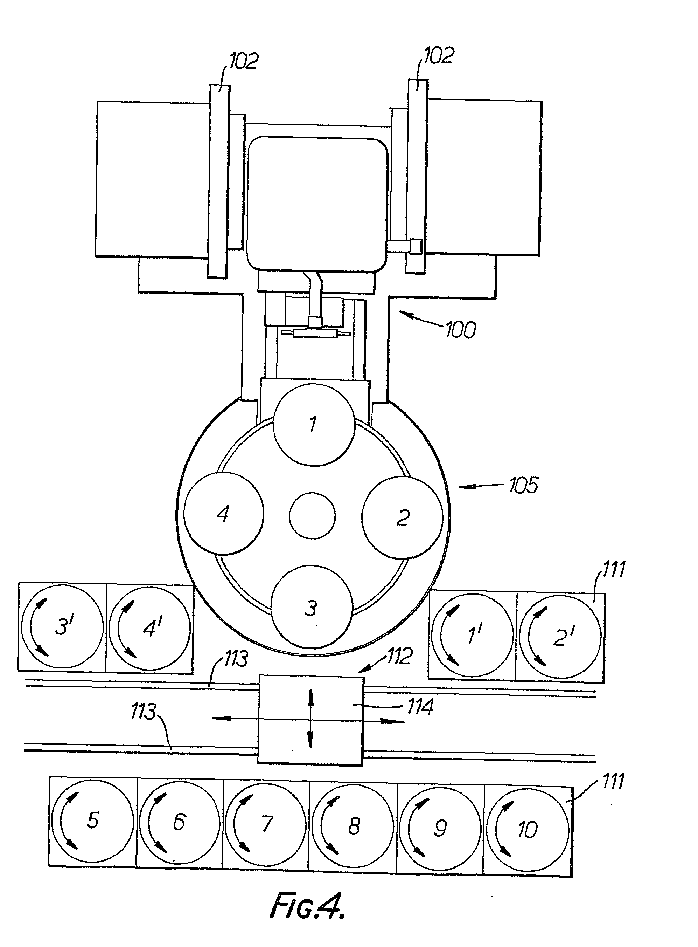

Figure 4 illustrates that the storage positions of the apparatus 111 can be arranged at both sides of the apparatus 112. Again, the vacant storage spaces are indicated at 1', 2', 3' and 4', because in this case the apparatus 105 is as shown in Figure 2.

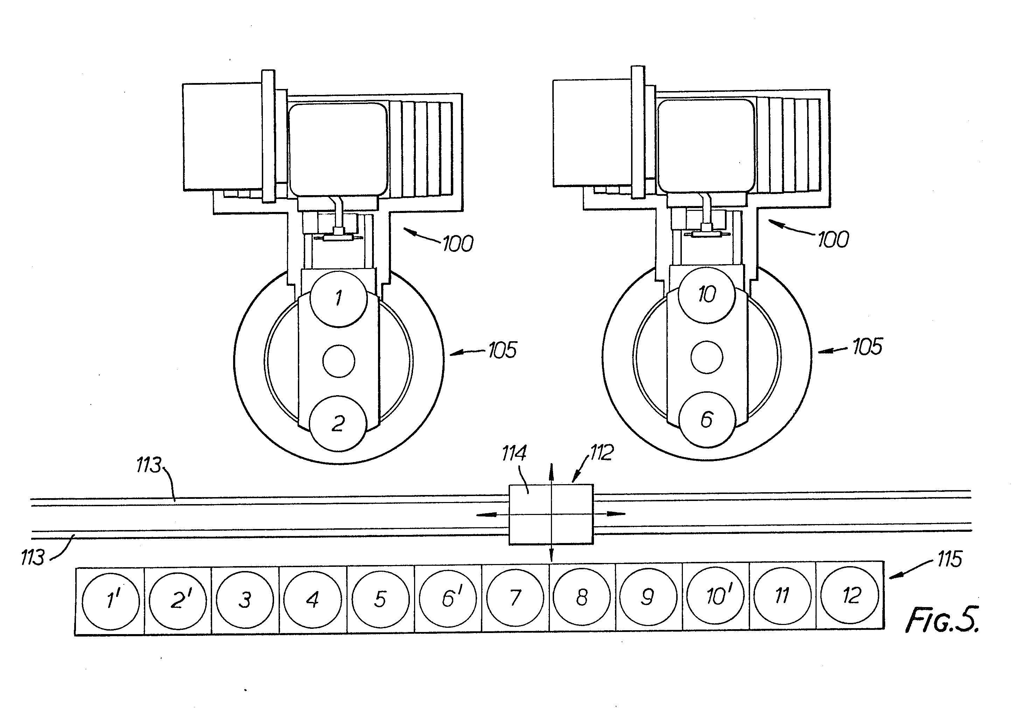

It is also possible to expand the system to cope with more than one machine tool with its pallet-presenting apparatus, yet utilizing a single transferring apparatus for transferring pallets to-and-fro between the temporary storing apparatus, on the one hand, and the plurality of pallet-presenting apparatus, on the other hand. An example is illustrated in Figure 5, wherein two machine tools 100 have their respective pallet-presenting apparatus 105 (each of which is as shown in Figure 1) loaded and unloaded with pallets by a single apparatus 112 servicing a temporary storing apparatus 115 for twelve pallets 1 to 12, the vacant storage spaces for the pallets 1, 2, 6 and 10 being referenced 1', 2', 6' and 10'.

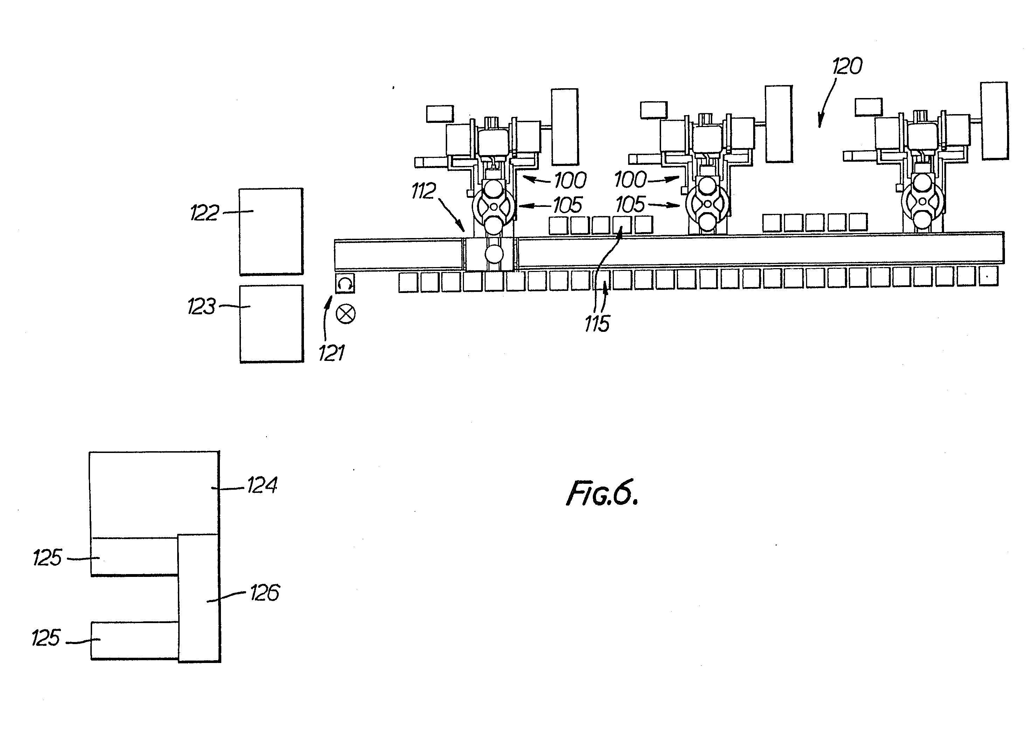

The system can be further expanded to cope with a line of machine tools with their pallet-presenting apparatus, while using a single transferring apparatus not only for transferring pallets to-and-fro between the temporary storing apparatus and the plurality of pallet-presenting apparatus but also for transferring the pallets to-and-fro between a pallet-loading and -unloading station and the temporary storing apparatus. An example thereof is shown in Figure 6, wherein a line 120 including three pairs of machine tools 100 have their pallet-presenting apparatus 105 loaded and unloaded with pallets by a single apparatus 112 servicing a temporary storing apparatus 115. The apparatus 112 not only transfers the pallets between the apparatus 115 and the apparatus 105, but also between a common pallet-loading and-unloading station 121 and the apparatus 115. The station 121 is at one end of the line 120 and also serves as a workpiece inspection station. Adjacent the station 121 is a stock materials zone 122 and a finished workpiece zone 123 for temporary storage in each case. Also shown is a tool refurbishment area 124, tool storage cabinets 125 and a tool setter 126.

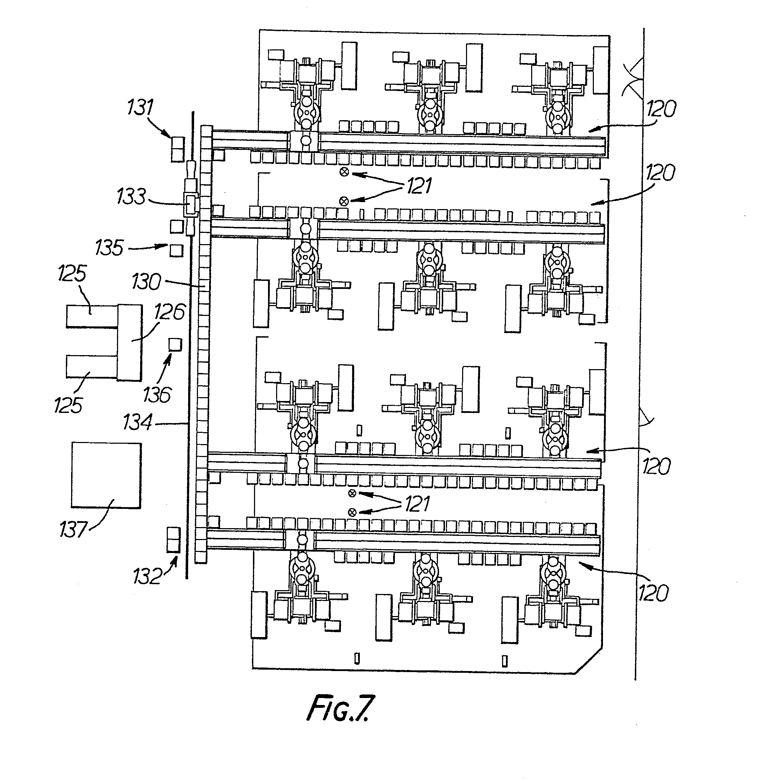

The system can be even further expanded to cope with a plurality of such lines. An example is shown in Figure 7, wherein four lines 120, but with their stations 121 spaced from the one ends thereof, are provided at the one ends thereof with a common temporary storage apparatus 130 for workpiece pallets. The workpiece pallets are transferred manually or automatically between the apparatus 130, on the one hand, and the stations 121, on the other hand. The workpiece pallets are transferred between a stock materials input zone 131 and the apparatus 130, and a finished workpiece output zone 132 and the apparatus 130, by a stacker crane 133 running on a guide 134 alongside the apparatus 130. Also indicated are a fixture setting area 135, a tool setting area 136, an inspection room 137, the cabinets 125 and the setter 126.

Owing to the present invention, it is possible for a customer of the manufacturer of the system to expand his machining capacity from a single machine tool with two pallets (Figure 1) to that same machine tool with more than two pallets (Figure 2, Figure 3 and Figure 4) thence to more than one machine tool with a considerable number of pallets (see Figure 5), thence to a line of machine tools with a large number of pallets (see Figure 6), and thence to a plurality of such lines with many pallets (see Figure 7). The system is so designed that this can be done by the customer purchasing various pieces of apparatus over the years, with substantially no pieces becoming redundant in consequence.

CLAIMS:

1. A flexible manufacturing system, comprising a machining apparatus (100, 105) comprising first and second supports (1, 2) for first and second workpieces, respectively, a holder for a tool for machining the workpieces, and drive means arranged to produce relative movement between said holder, on the one hand, and said supports (1, 2), on the other hand, so that said supports (1, 2) are in turn in a ready condition relative to said holder, characterized in that means (3-12, 110-134) are provided for use in converting said system to receive more workpieces than said first and second workpieces at any one time, said means (3-12, 110-134) comprising further apparatus (3-12, 110-134) comprising further supports (3-12) for respective further workpieces, which further supports (3-12) can be in turn in said ready condition relative to said holder.

2. A system according to claim 1, wherein said means (3-12, 110-134) comprises an indexing member (110) designed for indexing the first, second and further supports (1-4) and for replacing an indexing member (107) of said apparatus (100, 105) which latter member (107) is designed for indexing said first and second supports (1, 2) but not said further supports (3, 4).

3. A system according to claim 1 or 2, wherein said means (3-12), 110-134) comprises a temporary storing arrangement (111) for the first, second and further supports (1-5), and a transfer arrangement (112-114) for transferring these supports between said temporary storing arrangement (111) and said machining apparatus (100, 105).

4. A system according to claim 4, wherein said temporary storing arrangement (111) is disposed to one side of said transfer arrangement (112-114), and said means (3-12, 110-134) further comprises another temporary storing arrangement (111) for such further supports (5-10) and at the opposite side of said transfer arrangement (112-114), which also serves to transfer these latter supports between said other temporary storing arrangement (111) and said machining apparatus (100, 105).

5. A system according to claim 3 or 4, wherein said means (3-12, 110-134) further comprises another machining apparatus (100, 105) comprising another holder for a tool for machining workpieces, and another drive means arranged to produce relative movement between said other holder, on the one hand, and such further supports (6, 10), on the other hand, so that the latter supports (6, 10) are in turn in a ready condition relative to said other holder, said transfer arrangement (112-114) also serving to transfer such supports (6, 10) between said temporary storing arrangement (111) and said other machining apparatus (100, 105).

6. A method of utilizing a flexible manufacturing system, which system comprises a machining apparatus (100, 105) comprising first and second supports (1, 2) for first and second workpieces, respectively, a holder for a tool for machining the workpieces, and drive means arranged to produce relative movement between said holder, on the one hand, and said supports (1, 2), on the other hand, so that said supports (1, 2) are in turn in a ready condition relative to said holder, characterized in that said method further comprises converting said system to receive more workpieces than said first and second workpieces at any one time, by associating with said machining apparatus (100, 105) further apparatus (3-12, 110-134) comprising further supports (3-12) for respective further workpieces, such associating comprising arranging that said further supports can be in turn in said ready condition relative to said holder.

7. A method according to claim 6, wherein said associating comprises replacing an indexing member (107) for said first and second supports (1, 2) by an indexing member (110) for the first, second and further supports (1-4).

8.     A method according to claim 6 or 7, wherein said associating comprises providing a temporary storing arrangement (111) for the first, second and further supports (1-5) and a transfer arrangement (112-114) for transferring these supports (1-5) between said temporary storing arrangement (111) and said machining apparatus (100, 105).

9.     A method according to claim 8, wherein said associating comprises providing, at an opposite side of said transfer arrangement (112-114) to the temporary storing arrangement (111), another temporary storing arrangement (111) for such further supports (5-10), and arranging that said transfer arrangement (112-114) serves said other temporary storing arrangement (111) also.

10.    A method according to claim 8 or 9, wherein said converting further comprises providing another machining apparatus (100, 105) comprising another holder for a tool for machining workpieces, and another drive means arranged to produce relative movement between said other holder, on the one hand, and such further supports (6, 10), on the other hand, so that the latter supports (6, 10) are in turn in a ready condition relative to said other holder, and arranging that said transfer arrangement (112-114) serves said other machining apparatus (100, 105) also.

Fig.I.

FIG.2.

*Fig.3.*

*Fig.4.*

0121438

Fig.5.

0121438

120

100
105

100
105

115

112

121

122

123

124

126

125

125

Fig.6.

Fig.7

European Patent
Office

**EUROPEAN SEARCH REPORT**

0121438

Application number

EP 84 30 2252

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | WERKSTATTSTECHNIK, ZEITSCHRIFT FÜR INDUSTRIELLE FERTIGUNG, vol. 71, no. 9, September 1981, pages 543-547, Berlin, DE; F. KREMPEL: "Baukastensystem für NC-Fertigungseinheiten" * Page 546, left-hand column, line 30 - right-hand column, line 29; figures 3,5 * | 1,3-6, 8-10 | B 23 Q 7/14 |
| Y | Idem. | 2,7 | |
| X | VDI-ZEITSCHRIFT, vol. 119, no. 6, 2nd March 1977, pages P1-P3, Düsseldorf, DE; J. TUSZYNSKI: "Das Fertigungszentrum KOR-1 als Beispiel eines automatischen Maschinensystems" * Page P2, right-hand column, lines 1-48; figure 1 * | 1,3,5, 6,8,10 | TECHNICAL FIELDS SEARCHED (Int. Cl. 3) |
| Y | Idem. | 2,7 | B 23 Q B 65 G |
| X | WERKSTATTSTECHNIK, ZEITSCHRIFT FÜR INDUSTRIELLE FERTIGUNG, vol. 68, no. 11, November 1978, pages 681-685, Berlin, DE; W. RÖSSNER: "Palettenfördersystem mit Linearmotorantrieb" * Figure 9 * | 1,3,5, 6,8,10 | |
| Y | Idem. | 2,7 | |

-/-

The present search report has been drawn up for all claims

| Place of search THE HAGUE | Date of completion of the search 04-07-1984 | Examiner ROSENBAUM H.F.J. |
|---|---|---|

## European Patent Office

## EUROPEAN SEARCH REPORT

| | DOCUMENTS CONSIDERED TO BE RELEVANT | | Page 2 |
|---|---|---|---|
| Category | Citation of document with indication, where appropriate, of relevant passages | Relevant to claim | CLASSIFICATION OF THE APPLICATION (Int. Cl. ³) |
| A | Idem. | 4,9 | |
| Y | GB-A-2 049 503 (VICKERS LTD.) * Whole document * | 2,7 | |
| A | US-A-3 986 617 (BLOMQUIST) | | |
| A | EP-A-0 037 135 (GIDDINGS & LEWIS INC.) | | |
| A | GB-A-1 263 912 (MOLINS et al.) | | |
| A | WERKSTATTSTECHNIK. ZEITSCHRIFT FÜR INDUSTRIELLE FERTIGUNG, vol. 72, no. 12, December 1982, pages 673-678, Berlin, DE; H. TAUBER: "Bearbeitungszentren und Fertigungszellen nach dem Baukastenprinzip" | | TECHNICAL FIELDS SEARCHED (Int. Cl. ³) |
| A | DE-A-3 219 459 (MURATA KIKAI) | | |

The present search report has been drawn up for all claims

| Place of search THE HAGUE | Date of completion of the search 04-07-1984 | Examiner ROSENBAUM H.F.J. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82